# EUROPEAN PATENT SPECIFICATION

(11) **EP 2 478 298 B1**
(45) Date of publication and mention of the grant of the patent: **21.03.2018**
(21) Application number: 10760967.9
(22) Date of filing: 20.09.2010
(51) Int. Cl.: F23G 5/027, C10J 3/04, C10J 3/34, C10J 3/80

(54) **WASTE TREATMENT APPARATUS AND METHOD**
VORRICHTUNG UND VERFAHREN ZUR ABFALLBEHANDLUNG
APPAREIL ET PROCÉDÉ DE TRAITEMENT DE DÉCHETS

(30) Priority: 18.09.2009 GB 0916358
(43) Date of publication of application: 25.07.2012
(73) Proprietor: Pyropure Limited, Southampton, Hampshire SO40 9LT (GB)
(72) Inventor: CLARKE, Howard, Morgan, Liss Hampshire GU33 7NT (GB); BARTL, Peter, Bordon Hampshire GU35 9QF (GB); HOUSE, Christopher, John, Petersfield Hampshire GU31 5JA (GB)
(74) Representative: Schlich, George
(86) International application number: PCT/EP2010/063822
(87) International publication number: WO 2011/033113

(56) References cited:
- WO-A2-2007/104954
- US-A- 4 917 028
- US-A1- 2002 129 752

## Description

### Field

The present invention relates to waste treatment apparatus and methods, in particular apparatus and methods for treatment of waste from a range of sources, including commercial premises and domestic and multi-occupancy residences, by a process combining pyrolysis and combustion of waste.

### Background

A combined pyrolysis and combustion process, and related apparatus, is known from WO 2007/104954. This efficiently destroys waste, reducing it to ash.

In operation of the process and apparatus, the inventors herein have devised developments to modify and improve upon the waste treatment achieved.

JP 2007-263534 describes a moving bed type gasification furnace. Operation of the furnace includes continuously blowing gas into the combustion zone directly from the gasifier side combined with stirring. This action is said to increase the uniformity of temperature distribution in the combustion zone. Similarly, it is known to fit an internal circulation fan into the chamber of WO 2007/104954 to promote even temperature distribution. US 4917028 represents another example of an invention where waste is continuously agitated with gas. Other forms of agitation are also known; for example, in US 2002/129,752 vibration is described as a suitable means through which waste material can be agitated.

It is therefore an object of the invention to provide alternative, preferably improved, process and apparatus to treat waste on site on a domestic and/or large scale. It is an object of specific embodiments of the invention to do so for multi-occupancy residences and also individual domestic residences and commercial enterprises such as supermarkets and restaurants. A further object is to reduce and/or remove the need for the transport of waste and prevent waste ending up as landfill, allowing local authorities to meet the requirements of recycling directives. A still further object of the invention is to enable greater efficiency in collecting recyclable materials, improving public compliance by facilitating the recycling process.

Accordingly, the invention provides a process for waste treatment and apparatus for carrying out waste treatment by a combination of (i) pyrolysis and (ii) combustion (also referred to as oxidation or gasification) steps.

### Summary of Inventions

The invention comprises a process for waste treatment comprising introducing waste into a chamber, heating the waste to an elevated temperature to effect pyrolysis of the waste, introducing oxygen into the chamber to effect combustion of the waste, and removing combusted waste from the chamber, characterised by agitating the waste by periodically disrupting waste material with bursts of gas so as to promote combustion of the waste.

The invention also comprises an apparatus for waste treatment according to the above process, comprising:-
a sealable chamber,
a waste treatment zone in the chamber,
a port for introducing waste into the chamber,
a port for the exit of treated waste, and
a heating element,
one or more air inlets in a wall of the chamber,
a high pressure air source,
one or more conduits to connect the air inlets to the high pressure air source, and control equipment,
characterised in that the control equipment is adapted to agitate the waste by periodically disrupting waste material by introducing bursts of air into the chamber via the control equipment and the one or more air inlets so as to promote combustion of waste.

### Details of the Invention

Processes for waste treatment are described herein comprising introducing waste into a chamber, heating the waste to an elevated temperature to effect pyrolysis of the waste, introducing oxygen into the chamber (typically using air) to effect combustion of the waste, and removing combusted waste from the chamber. Pyrolysis is carried out in the substantial absence of oxygen, meaning in practice a substantial absence of air. Typical operating temperatures are set out elsewhere herein. Waste may be thus destroyed by a combination of pyrolysis, combustion and combustion of that fraction of the waste that remains as char after pyrolysis.

The term combustion as used herein refers to the oxidative breakdown of waste materials using high temperatures and controlled oxygen input resulting in a substantially flame-free process phase. This phase of the process of the invention may also be termed gasification and/or oxidation.

Treated waste is generally mostly fine ash, but may also contain materials which remain untreated, such as metals and glass, which may be retained in the chamber, optionally separated from the ash. In an embodiment of the invention, the chamber has a grid with holes through which ash can pass but which retains larger items such as metal and glass. A grid is preferably located in the chamber forming a shelf or part of a shelf, and the method can comprise placing waste e.g. bags of waste, on the grid prior to treatment.

It has been noted that in operation of a known machine some items such as plastics decompose or evaporate during pyrolysis and are easily treated but other items such as especially paper and textiles tend to accumulate in piles, with the middle of the pile insulated from temperature and combustion. At the end of the process, which for practical purposes is generally time limited, there may be charred remains that have not been fully treated. In other words, the waste treatment may be incomplete. The method of the invention comprises agitating waste during combustion. This can assist reducing the total time needed for the combustion step. It can assist increasing the amount of material combusted, leaving a reduced amount of untreated waste, preferably substantially no untreated waste, at the end of the process.

The invention accordingly provides a process for waste treatment comprising:-introducing waste into a chamber, heating the waste to an elevated temperature to effect pyrolysis of the waste, introducing oxygen into the chamber to effect combustion of the waste, and removing combusted waste from the chamber, optionally with water,
characterised by agitating the waste by periodically disrupting waste material with bursts of gas so as to promote combustion of the waste. The method comprises agitating the waste with gas, in particular by introducing gas at high pressure into the chamber so as to agitate the waste during combustion. In one method, a pile of combusting waste in the chamber is repeatedly agitated so as to promote combustion of waste within the pile. Waste is thus disrupted and for example sheets of paper in a pile or waste lying on top of and obscuring other uncombusted material is or are disrupted so that the hot, combusting atmosphere of the chamber has improved access to that otherwise hidden or obscured material.

Typically gas blasts are used of sufficient pressure and duration to disrupt an ash membrane formed on the surface of the waste pile during combustion. In embodiments of the invention the gas blasts are of sufficient pressure and duration to disrupt the waste pile. Preferably the disruption of the waste pile by gas blasts exposes uncombusted material from the interior of the waste pile to air (oxygen) in the chamber, promoting complete breakdown of all combustible material.

The waste is agitated discontinuously. For example, a gas blast of duration less than 10 seconds or less than 5 seconds, preferably less than 3 seconds, more preferably 1 second or less may be followed by a period without gas blasts of at least 10 seconds or at least 20 seconds or at least 1 minute, preferably at least 2 minutes. Gas agitation may be used as and when needed according to the operator or as governed by control equipment.

The waste may be agitated at a frequency of from at least once every 20 seconds to at least once every 5 minutes. In use of the invention, we have agitated using bursts of air every 30 seconds and every 3 minutes, both found effective. Typically, air is used. Also typically, air is introduced at a pressure of 3 atmospheres (303.975 kPa) or greater, preferably 5 atmospheres (506.625 kPa) or greater. Hence, in specific embodiments, the method comprises periodically agitating combusting waste material with bursts of gas, preferably from different directions, so as to promote complete combustion of the waste.

In embodiments of the invention gas blasts may use inert gases such as nitrogen, argon, helium or mixtures thereof. The use of inert gases rather than air avoids intermittent input of additional oxygen to the system, which may be advantageous as combustion temperature within the apparatus is generally controlled by controlling air input to the chamber.

Gas bursts using air are typically used towards the end of the combustion phase of waste treatment as bursts of air during the pyrolysis phase may disrupt pyrolysis and problems of incomplete combustion tend not to arise during the early stages of combustion. Gas bursts using inert gases may be initiated during combustion or pyrolysis phases of waste treatment.

The disclosure provides, in this aspect, apparatus for waste treatment as defined above and in claim 9.

There are preferably two or more air inlets. The one or more air inlets can be in the form of nozzles located in a wall portion, preferably a lower wall portion of the chamber, being at least half way down the wall, or in the bottom of the chamber. They are hence suitably adapted in use to direct air at high pressure towards combusting material located towards the bottom of the chamber. One or more inlets in the sides of the chamber enable agitation from the sides, and one or more inlets in the bottom of the chamber enable agitation from below. A combination of disrupting bursts of air from different directions may produce a good result.

An apparatus of the invention, described below in more detail, comprises a high pressure air source.

In embodiments of the invention, two or more inlets are arranged in the side walls of the chamber. Preferably the inlets are arranged on opposite walls of the chamber so that bursts of gas can be input from alternating sides of the chamber. In preferred embodiments of the invention gas is injected through fan spray-heads, which spread the gas over a range of 65 to 180 degrees, preferably 90 to 120 degrees along a one dimensional plane (providing a broad, very "flat" spray, shaped like a fan). The inlets typically enter the chamber at a 90 degree angle in relation to the chamber wall and are then rotated about their axis such that the "fan shaped spray" of gas is orientated at about 45 degrees to the vertical.

A control equipment is suitably included, adapted to introduce air into the chamber periodically via the one or more air inlets during the combustion phase of the process. In an example machine, made and tested, air was input from two jets located on opposite sides of the chamber, with air being input alternately from the two jets. Air was input under seven atmospheres (709.275 kPa) of pressure for a duration of 0.4 seconds per blast - note also that a range of pressures will work. In this time, approximately 3 litres of air was injected into the chamber per burst. The frequency used was one burst every 30 seconds, though the method has worked satisfactorily with a frequency of one burst every 3 minutes.

This agitation method is independent of how the combusted material is removed from the chamber, whether mechanically using e.g. an auger or with water flushing or otherwise.

In typical use, a chamber fitted with such an air-blast system employs discontinuous, high-pressure bursts whose purpose is to physically dismantle waste beds that have become compacted and covered in ash, and so do not allow the normal-pressure air flow to penetrate. Combustion of waste in general is improved. In particular, waste mixes with large amounts of paper are much more efficiently destroyed with the air blasts.

A physical disruption of the waste bed through mechanical agitation means may partially achieve the same purpose, but the gas blasts of the invention have the advantages, inter alia, of (1) simpler construction of the chamber and (2) reduced sensitivity to hard bits of waste (cans, bottles, etc). An additional advantage of the air agitation via jets rather than mechanically is hence that there are no additional internal components to the chamber - these internal components being liable to failure.

In preferred embodiments of the invention a software subroutine is used to control air blasts. Typically, at a set period into the combustion phase of waste treatment the software commences checking process parameters. These checks may be carried out from 30 up to 120 minutes into the combustion phase and are preferably carried out from 60 up to 100 minutes into the combustion phase. In preferred embodiments of the invention combustion checks are carried out about 70 or about 90 minutes into the combustion phase. The software checks that at least one of the following process parameters is met; the chamber is not hotter than a pre-determined maximum temperature, the exit of the catalyst reactor is not hotter than a predetermined temperature and air input during combustion has reached its maximum value. In embodiments of the invention at least two of these parameters must be satisfied and in preferred embodiments of the invention all of the set parameters must be satisfied. The parameter checks ensure that air blasts are input only when combustion is running under conditions which are not likely to be excessively disturbed by the air blasts. Once parameter checks have been satisfied the air blast subroutine can be activated.

A separate problem with a method using catalytic off-gas treatment, the subject of an earlier filed patent application by the same applicant now published as WO 2010/073008, is that during the pyrolysis phase there is a relatively small volume of pyrolysis off-gas generated in the chamber, and the gas may furthermore be generated sporadically, and may pass through the catalyst in bursts, due to uncontrolled and unpredictable expansions within the chamber during pyrolysis. Note that the pyrolysis process is fundamentally endothermic, in the substantial absence of oxygen. A problem is that the low and irregular flow of gas can mean that process control is difficult. There may be inadequate treatment by the catalyst as a result. In addition, the low amount of gas generated in the chamber can mean that temperature distribution in the chamber is not even.

Accordingly, a second aspect of the disclosure which is not according to the invention provides a process for waste treatment, comprising:-
introducing waste into a chamber, heating the waste to an elevated temperature to effect pyrolysis of the waste, introducing oxygen into the chamber to effect combustion of the waste, and removing combusted waste from the chamber, wherein pyrolysis of the waste generates off-gases which are passed through a catalyst to remove one or more noxious components thereof, and
wherein the process comprises introducing gas, typically air, into the chamber during pyrolysis.

Preferably, the method comprises introducing gas, especially air, into the chamber during pyrolysis in an amount sufficient to provide a steady flow of off-gas from the chamber but sufficiently small (e.g. with sufficiently low oxygen content) that the pyrolysis remains endothermic. Introduction of air is not intended to effect significant combustion or oxidation of the waste, but is enough to flow gas smoothly out of the chamber. Air flow is related to chamber volume and waste load, though generally air can be introduced at a rate of up to 10 litres per minute per kg of waste, preferably at a rate of up to 7 litres per minute per kg of waste or at a rate of up to 4 litres per minute per kg of waste. Generally air is introduced at a rate of a least 0.5 litres per minute per kg of waste. In examples of operating this method, air has been introduced at a rate of approximately 10-20 litres per minute for a 8 Kg load of waste being processed in 3 hours. This compares with a typical air input rate of 100-150 litres per minute during the combustion phase for that process. Higher rates are used with bigger chambers and higher waste throughput. In a specific example, described in more detail below, 16 L/minute was input for an 8 Kg waste load, i.e. at 2 L/minute/kg of waste during the pyrolysis phase.

The solution in this second aspect is thus to introduce a small amount of gas, conveniently air, into the chamber during the pyrolysis stage. Not enough is introduced to mean the phase is other than endothermic. The air is introduced so as to provide some flow of pyrolysis off-gas through the catalyst in a more controlled way. In addition, there is another advantage as the introduction of air enables circulation of the chamber contents to provide a more even temperature distribution.

It is a further option to use a pump to evacuate the chamber and draw off the pyrolysis off-gas.

Again, introduction of air during the pyrolysis phase is independent of how the ash is removed from the chamber.

In machines made to date which incorporate the pyrolysis / combustion method, a basket, grid or similar is used to provide a shelf onto which waste can be loaded in the chamber and to capture metal, glass and other items not treated by the process, which items either are removed after each cycle or which accumulate and are removed after several cycles. The tiny particles of ash fall through the grid but the bigger metal and glass particles do not and are retained.

A problem is that ash may be produced as a "ghost" of the combusted waste and can retain some integrity, hence it will not easily disintegrate into tiny particles and fall through the grid; also, ash may accumulate on top of the non-treated metal/glass or other material and so be prevented from falling through to the bottom of the chamber and the ash collection point, for example an auger or ash box.

A third aspect of the disclosure which is not according to the invention provides a process for waste treatment, comprising:-
introducing waste into a chamber, heating the waste to an elevated temperature to effect pyrolysis of the waste, introducing oxygen into the chamber to effect combustion of the waste, and removing combusted waste from the chamber,
comprising agitating accumulated ash produced by the combustion so as to dislodge the ash and urge it towards an exit of the chamber.

In one such method, accumulated ash is agitated by injecting air into the chamber. This can be achieved by injecting air at high pressure from one or more outlets in a wall of the chamber. The ash is disrupted, for example the integrity of a "ghost" is broken up and particles of ash can now pass through the grid. Ash particles lying on, say, a piece of metal are blown away and no longer prevented from falling towards the bottom of the chamber.

Air bursts suitable for this aspect may have the same characteristics of those used to promote complete combustion as described elsewhere herein, and one set of bursts may achieve both effects. Air bursts for the third aspect, to dislodge ash, may occur towards the end of the combustion phase. Air bursts to promote combustion may occur from earlier on, generally from the halfway point of combustion towards the end of combustion, though in practice the two phases may overlap. Air bursts to dislodge ash may also occur after combustion has finished, for example as part of the chamber cycle or as part of a cleaning step.

Ash may also be dislodged, in another embodiment of the invention, by injecting water into the chamber, optionally in the form of steam. Steam bursts may have additional force and be effective at lower frequency than air bursts. Steam busts may also be used after combustion has finished. The amount of water used is preferably sufficiently small that all is evaporated and exits the chamber as steam, none exiting as water. In this way, there is no need for a water drain to the chamber. An embodiment of the invention provides an apparatus wherein the one or more air inlets can independently be used to introduce air into the chamber, and wherein the control equipment is further programmed to operate in at least one of the following modes:-
(i) air is introduced into the chamber during pyrolysis of waste in the chamber to dilute off-gas exiting the chamber; and
(ii) air is introduced into the chamber during combustion to dislodge accumulated ash.

Optionally, said one or more inlets are connected to an air supply and to a water supply via the control equipment such that the or each of the one or more inlets can independently be used to introduce air or water into the chamber, and wherein the control equipment is also programmed to operate in mode (iii) wherein water is introduced into the chamber during combustion to dislodge accumulated ash.

In a further embodiment of the invention, air and water inputs are provided, hence said one or more inlets are connected to an air supply and to a water supply via the control equipment such that the or each of the one or more inlets can independently be used to introduce air or water into the chamber, and wherein the control equipment is also programmed to operate in mode (iv) wherein water is introduced into the chamber during and/or after combustion to dislodge accumulated ash.

The combustion phase of the process of the present invention tends to generate ash, which floats within the chamber and the concentration of ash can be increased following physical disruption of the waste, e.g. by high pressure gas bursts. This ash can damage the catalyst and is thus preferably filtered out of the gas exiting the chamber prior to contact of the gas with the catalyst. Metal or ceramic filters can be used but the inventors have thus far been unable to indentify suitable metals or ceramics which can withstand the heat, temperature changes and corrosive nature of the ash over repeated chamber cycles. A preferred option of the invention is therefore to filter the ash using an inertial separator such as a cyclone filter.

Accordingly, an aspect of the disclosure which is not according to the invention can provide a process for waste treatment, comprising:-introducing waste into a chamber, heating the waste to an elevated temperature to effect pyrolysis of the waste, introducing oxygen into the chamber to effect combustion of the waste, and removing combusted waste from the chamber, wherein pyrolysis of the waste generates off-gases which are passed through a catalyst to remove one or more noxious components thereof, and
wherein the off-gases are filtered using an inertial separator prior to contact of the off-gases with the catalyst. A further aspect of the present disclosure which is not according to the invention provides an apparatus for waste treatment, comprising:-a sealable chamber,
a waste treatment zone in the chamber,
a port for introducing waste into the chamber,
a port for the exit of treated waste,
a heating element, and
a catalyst
the apparatus further comprising an inertial separator between the chamber and the catalyst.

The inertial separator may be a settling chamber, baffle chamber or centrifugal collector. In preferred embodiments a centrifugal collector such as a cyclone separator is used. Suitable cyclone separators include single-cyclone separators, multiple-cyclone separators and secondary air flow separators. In preferred embodiments a single-cyclone separator is used. Centrifugal separators such as cyclone separators have a particular advantage as they can be used both to remove ash from the off gas and and mix off-gas with air from a separate air supply to go into the catalyst. Apparatus of a particular embodiment, described in use below, comprises a cyclone that receives off gas from the chamber and receives an air supply for catalyst air and has an output to supply filtered, mixed resultant gas to the catalyst.

In preferred embodiments filtration of off-gases using an inertial separator is carried out in combination with the use of high pressure gas bursts (as described above). An inertial separator may also be used when air is introduced into the chamber during the pyrolysis phase of waste treatment.

This filtration method is independent of how the combusted material is removed from the chamber, whether mechanically using e.g. an auger or with water flushing or otherwise.

A process for waste treatment comprises introducing waste into a chamber, heating the waste to an elevated temperature to effect pyrolysis of the waste, introducing oxygen into the chamber to effect combustion of the waste, and removing combusted waste from the chamber, wherein the elevated temperature to effect pyrolysis can be from 200-700°C or from 350-700°C and is typically from 400-700°C. Operating at these temperatures tends to avoid formation of some of the more noxious contaminants associated with standard pyrolysis units or form them to a lesser degree, whilst ensuring that substantially all waste, other than recyclable components, can be treated. Hence an advantage of the invention is that treatment of off gases can be carried out with reduced on-site emissions. The pyrolysis temperature is preferably from 500-700°C, more preferably from 500-600°C. In a specific embodiment of the process, the system operates at about 550°C.

It is further preferred that combustion is carried out at elevated temperatures, typically 300°C or higher, 400°C or higher, preferably at least 450°C more preferably at least 500°C. In typical operation of an apparatus of the invention, the chamber is heated to the pyrolysis temperature, pyrolysis is carried out and then combustion is carried out as the next step without specific separate heating or cooling of the chamber. Heat generated by combustion generally maintains an elevated temperature within the waste and depending upon its calorific content may slightly increase the temperature so chamber heaters are generally turned off during combustion. Heat can be removed from the chamber by passing off gases through a radiator or a heat exchanger and recovered heat can be used for other purposes. Chamber temperature can also be controlled by controlling flow of air into the chamber. Generally chamber temperature during combustion does not rise above 800°C and preferably not above 750°C or 700°C.

The duration of the pyrolysis phase can vary according to waste volume, in turn with a limit dictated by chamber volume. Apparatus of the invention are generally designed for use both in domestic and multi-occupancy residences and small commercial premises but also in larger, commercial settings.

Waste may enter the chamber at ambient temperature. The chamber is then sealed and the heaters are activated to heat the chamber to the operating temperature. Waste may enter the chamber at an elevated temperature, for example if there is little or no chamber cooling since its last operation. The chamber is then sealed and may already be at operational temperature; if needed, the heaters are activated to return the chamber to an operating temperature.

In apparatus made and tested to date, this heating phase from ambient typically takes 2-20 minutes, preferably 5-10 minutes, being dependent on the operating temperature required, the chamber volume, and volume of waste in the chamber. In use, it is found that off-gases can evolve in fractions as the temperature increases and this is believed to result in reduced production of certain toxic components, notably dioxins and fluorins compared to industrial pyrolysis using higher temperatures, following rapid heating. Processes carried out in apparatus of the invention generally comprise holding the waste at the elevated temperature for 10-90 minutes, preferably for 20-60 minutes. In a specific embodiment of the process, the pyrolysis phase has a roughly 40 minute duration.

In some embodiments of the invention intelligent timing systems are used to control the length of the cycle. These systems can monitor the temperature of the off-gases being produced and adjust the cycle duration accordingly. Use of these systems improves the power efficiency of the process. In one example, a control system monitors the temperature of the off-gases or of the load, such as via a thermocouple located proximal to the waste in the chamber, and triggers commencement of combustion once a predetermined temperature (say, about 450°C-500°C) is reached. In another example, a control system monitors the temperature of the off gases from the chamber and when the temperature has dropped to a pre-determined level (say 300°C-400°C) initiates the end of the combustion and, optionally, the beginning of cooling and cleaning of the chamber by introduction of water (as superheated steam). Another option is to monitor the rate of cooling of the chamber, and once this reaches or approaches the natural cooling rate of the chamber, then initiate the end of the cycle. Another option is to monitor the oxygen content of gas leaving the chamber; a sufficiently high level of oxygen indicates combustion has stopped.

In an example of the invention operating in situ, the apparatus is set up with a preprogrammed pyrolysis phase, based on the chamber volume and anticipated nature of the waste to be processed. The phase may be set up such that the elevated temperature is held for the duration of the pyrolysis phase and such that 50% or more of the waste is degraded, preferably 70% or more, more preferably 80% or more. In practice it is problematic and energy inefficient to ensure 100% treatment, especially when recyclable material is present such as metals and glass, which would not be degraded and which can be extracted for recycling. From expected waste volume and content the system may be set up for a given property so that from 60% - 95% of waste by weight is pyrolysed.

In a typical operation of the apparatus, waste enters the destruction chamber and the lid is sealed, the chamber is then heated, to about 550°C. The off-gases produced during pyrolysis are monitored; as waste is destroyed the levels of these gases reduce, once they drop below a predetermined threshold the heaters are switched off. During pyrolysis air is introduced into the chamber at a low rate, about 5-10 litres per minute to flow off-gas through the catalyst. After pyrolysis, substantially in the absence of oxygen, air is then passed through the heating coil and admitted into the chamber, this is at approximately 200-500°C on entry. Entry of the air initiates combustion of the residual waste within the destruction chamber. No external heat is applied at this stage but the heat from the pyrolysis stage is retained. Regular agitation of the combusting waste is carried out with bursts of air towards the end of the combustion phase. Gas output is monitored during combustion, and while waste is present the chamber output exceeds the air input. Oxygen content can also be monitored for this purpose. During combustion, waste is agitated as described herein to promote full combustion and reduce untreated waste at the end. When the gas output drops below, or oxygen content rises above (depending upon the monitoring adopted), a set threshold the airflow is shut off as combustion is considered finished for that cycle of operation. The residual waste, now largely ash can be agitated with air and/or water to help dislodge ash so that it falls to the bottom of the chamber and is not retained on the grid. Ash is then removed from the chamber. This can be during combustion, e.g. using an auger or after combustion e.g. by and auger or by flushing with water. Non-combusted material is retained by the metal grid, this can be removed for recycling or left in the machine for another cycle(s). Some pyrolyzable material may require two or three cycles before it is completely destroyed.

Waste gases produced by pyrolysis and / or combustion are suitably treated to remove noxious components, depending upon the emissions standards required to be met in any given application.

Gases can be passed through an oxidation catalyst, fed with air, preferably heated air, to destroy noxious components by oxidation.

Gases can be passed through an aqueous agitation system, to assist dissolution of gases. Gases can be bubbled through the solution, optionally containing softened water and optionally containing additives to promote dissolution of the gases. Gases may also be passed through a water scrubber. Not all gases may be dissolved in the solution and it is preferred that gases are also filtered within a gas cleaning chamber. A catalyst can act as a gas cleaning chamber, and may be placed upstream or downstream of a scrubber. The method also may comprise discharging undissolved gases into the sewage system. Hence, in an embodiment, filtered exhaust gases that have not been dissolved in solution or retained within the filter are discharged into the sewer. These gases then pass up the soil pipe to vent through venting stacks. The filtered exhaust produced is substantially colourless and odourless, principally consisting of carbon dioxide and carbon monoxide, though with a functioning catalyst the carbon monoxide content is generally very low.

In embodiments comprising a catalyst it is preferred to filter off-gases using an inertial separator prior to contact of the off-gases with the catalyst. In specific embodiments designed for domestic and such uses, all of the byproducts of the process are disposed of into the sewer.

Combusted waste can be flushed from the chamber with water, wherein the water is introduced into the chamber as superheated steam. In use, the steam cools and cleans the chamber and flushes away the ash residue of treated material. This is convenient and efficient. The chamber is left looking clean and hence more acceptable for users. There is reduced risk of residue in the chamber which is unsightly or has unpleasant odour. To carry out the flushing, water can be introduced into the chamber via piping in walls of the chamber, the water being heated to form superheated steam as it passes through the piping. In this way the water is heated to the desired temperature by the chamber heat. Also, the chamber is cooled in readiness for a next cycle of use.

An oxygen supply (generally as air) is preferably linked by piping to the chamber and arranged such that in use oxygen is supplied to the chamber via the piping. Water, if supplied to the chamber, can be supplied to the chamber via the same piping. Flow rates vary with factors including chamber size. Air input during pyrolysis can be as low as 5 litres per minutes. Air input during combustion of a large load may be from 50 to 1000 litres per minute. We have operated embodiments with air flow rates of from 25 - 200 litres/min.

For all aspects of the invention, the chamber volume may vary; suitable chambers volumes are in the range from 0.01 - 5.00m³, preferably from 0.01 - 3.00m³, for domestic type units more preferably in the range from 0.02 - 0.30m³, especially from 0.03 - 0.20m³ or from 0.04 - 0.10m³. Chambers with volumes of about 0.06m³ and about 0.14m³ have been successfully tested to date.

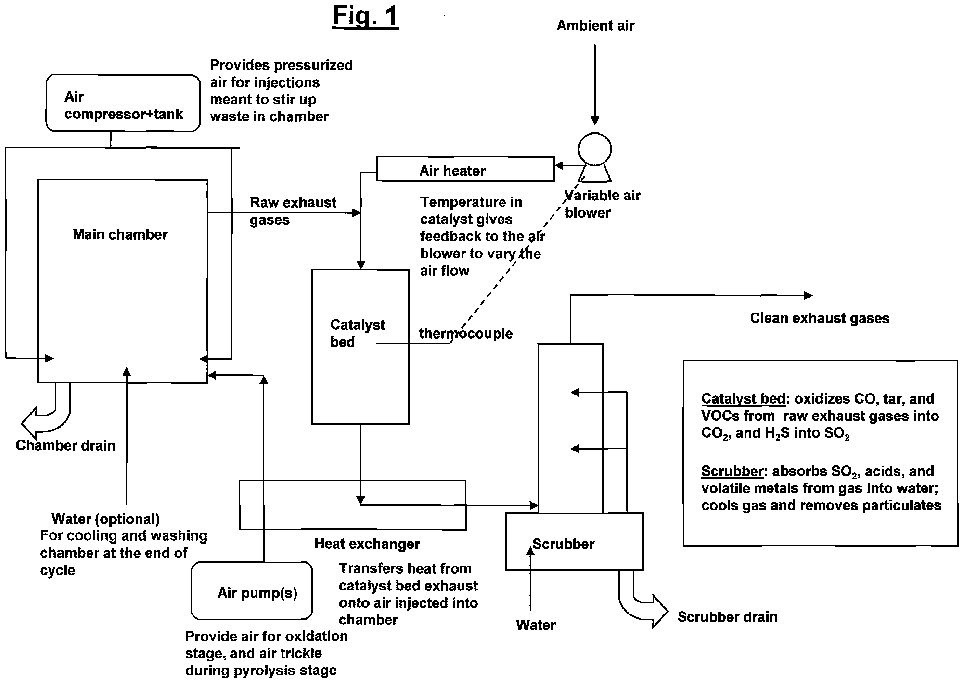

The invention is now illustrated in the following specific embodiment with reference to the accompanying drawing in which:-
Fig. 1 shows a schematic diagram of apparatus of the invention

### Example 1

Waste is processed by pyrolysis and combustion in a sealable chamber shown schematically in Fig. 1 having a lid, heated using panel heaters and having a gas exit port, a catalyst for off-gas treatment, a heater to heat air for the catalyst, a gas scrubber and a heat exchanger to heat air entering the chamber with heat extracted from exhaust gas. Water input for cleaning and emptying the chamber is optional.

The lid of the processing chamber is opened and a waste load of approximately 8 Kg enters the chamber (which is at ambient temperature) and is placed on a grid towards the bottom of the chamber. The lid is then closed and the chamber is sealed.

The chamber panel heaters are activated and the interior temperature is raised to between 500-550°C. Air is input to the chamber from the start at a rate of approximately 16 L/minutes to flow off-gases smoothly from the chamber and to promote even temperature distribution within the chamber, the catalyst bed is heated with air from the blower to about 550-600°C and the emitted gases are passed through the catalyst.

Air input to the catalyst is initially about 200 L/minute, rising to 800 L/minute during the process, and the pyrolysis phase lasts for approximately 40 minutes.

After the pyrolysis phase has completed the external panel heaters are turned off and air input to the chamber is increased up to about 150 L/minute for the oxidation / combustion phase.

With the introduction of air, the waste begins to glow. The volume of the waste decreases further, typically reaching around 5% of its original volume. The waste is converted to a very fine ash. Smoke and particulate levels in the system increase during the air injection phase. All gaseous exhausts are passed through the catalyst.

During the combustion phase, the combusting mass of waste is agitated by high pressure blasts of air, alternately from opposite sides of the chamber, air being injected every minute in 0.4 second blasts at 7 bar (7 atmospheres (709.275 kPa)), the amount of air injected being approximately 3 L per blast. This agitates the mass and promotes full combustion. Towards the end of the combustion phase, similar agitation is used to dislodge ash that had piled up on the grid or accumulated on top of untreated metal or glass, so the ash drops to the bottom of the chamber.

When the combustion phase has completed the air injection is turned off, the gas exhaust valve is closed and ash is removed from the chamber whilst the chamber is still hot using an auger. The system is ready for the next cycle.

### Example 2

Waste is processed as per example 1. At the end of the combustion phase, the liquid exhaust valve is opened and water flows through the same tubes as the air, around the outside of the chamber and is injected as superheated steam. The steam is initially injected in a series of pulses, then as a constant stream. The pulses are of duration 150 - 300 milliseconds, then 500 - 1000 milliseconds every 30 seconds then continuously on for 3 minutes, when the water is injected at approximately 2 l/min.

The initial steam blasts dislodge ash, urging it towards the chamber exit. At this stage all steam can exit the chamber as a gas, there being no water output. Subsequent steam both flushes the ash out through to the exhaust, and cleans the internal faces of the chamber. The steam has a cooling effect on the chamber, and after approximately 1 minute the internal temperature of the chamber drops to below 100°C. After the steam injection has completed the lid opens and the system is ready for its next cycle. Any incompatible waste that has not been decomposed by the cycle is held in a drawer, and can be removed and recycled.

### Example 3

Waste is processed by pyrolysis and combustion in a sealable chamber shown schematically in Fig. 1 having a lid, heated using panel heaters and having a gas exit port, a catalyst for off-gas treatment, a heater to heat air for the catalyst, a gas scrubber and a heat exchanger to heat air entering the chamber with heat extracted from exhaust gas. Water input for cleaning and emptying the chamber is optional.

The lid of the processing chamber is opened and a waste load of approximately 8 Kg enters the chamber (which is at ambient temperature) and is placed on a grid towards the bottom of the chamber. The lid is then closed and the chamber is sealed.

The chamber panel heaters are activated and the interior temperature is raised to between 500-550°C. Air is input to the chamber from the start at a rate of approximately 16 L/minutes to flow off-gases smoothly from the chamber and to promote even temperature distribution within the chamber, the catalyst bed is heated with air from the blower to about 550-600°C and the emitted gases are passed through the catalyst.

Air input to the catalyst is initially about 200 L/minute, rising to 800 L/minute during the process, and the pyrolysis phase lasts for approximately 40 minutes.

After the pyrolysis phase has completed the external panel heaters are turned off and air input to the chamber is increased up to about 150 L/minute for the oxidation / combustion phase.

With the introduction of air, the waste begins to glow. The volume of the waste decreases further, typically reaching around 5% of its original volume. The waste is converted to a very fine ash. Smoke and particulate levels in the system increase during the air injection phase. All gaseous exhausts pass through a cyclone where they are filtered and mixed with air for the catalyst before being passed through the catalyst.

70 minutes into the combustion phase a software subroutine checks that the following process parameters are met:-
the chamber is not hotter than 600°
the exit of the catalyst reactor is not hotter than 680°C
air input to the chamber is at 150 L/minute.

Once all process parameters are satisfied the air blast subroutine is activated and the following steps are carried out:-
air input to the chamber is reduced by two thirds,
air flow to the cyclone is increased to maximum,
a compressed air pump is activated for 14 seconds, pumping air into a 0.7L tank connected to air injection points within the chamber,
air pressure in the tank reaches about 7 bar,
a valve connected to an air injection point is opened for 400 milliseconds then closed,
after 4 seconds the valve is opened again for 400 milliseconds,
this is repeated five times with the same valve and the air tank is emptied,
the air tank is then recompressed as above and the process is repeated for
the opposite air valve.

Air input to the chamber is gradually increased back up to 150L/min. The software again checks the process parameters and once these are met the air blast subroutine is again activated as above.

Towards the end of the combustion phase, air agitation is used to dislodge ash that has piled up on the grid or accumulated on top of untreated metal or glass, so the ash drops to the bottom of the chamber.

When the combustion phase has completed the air injection is turned off, the gas exhaust valve is closed and ash is removed from the chamber whilst the chamber is still hot using an auger. The system is ready for the next cycle.

### Example 4

Apparatus was loaded with catalogues having gloss paper sheets. The catalogues were placed in the exact centre of the chamber grid and had A4 dimensions, forming a pile of 96mm in height and had a weight of 4kg. The grid was formed by a mesh basket which was suspended within the chamber. The chamber of the apparatus used was approximately 43cm in internal diameter, and approximately 75cm in internal depth.

The waste treatment process was computer software controlled and proceeded in the following manner:-
- Upon starting the run, the catalyst was first heated by a flow of hot air, and the chamber was heated up to a maximum of 120°C as measured by the air temperature in the top section of the chamber.
   Pyrolysis Stage
- After approximately 30min, as the catalyst bed had reached 380°C, the chamber temperature set point was increased to 350°C, and air was injected from the chamber bottom to a flow of approximately 25L/min (the air trickle air flow).
- These conditions were maintained for 30min.
   Gasification Stage
- The temperature set-point was increased to 480°C, and the main air pump was switched on, gradually increasing its air flow by 20% every 20s until its maximum of approximately 150L/min was reached.
- This condition remained unchanged for 70min (during which there was constant air flow).
- After 70min: (1) the temperature set point of the chamber was increased to 550°C and (2) the air blasts sequence started.
- The air blasts sequence operated as described in example 3, with the following exceptions:
   1. the compression time was set to 18s (having an initial pressure of 7bar)
   2. the main air pump was cyclically reduced to around 30% of maximum (by closing an air valve) and, in principle, increased by 20% every 20s. Whenever the air flow reached maximum, it was reduced again to 30% and the air blast sequence started. That resulted in about one double sequence (that is, once from each side) approximately every 3 minutes.
- 100 min after the start of the air blasts (170min since the start of the gasification stage), the process automatically timed out and all the heaters and air pumps (but not the air blower into the catalyst) were switched off. Cooling
- Normally, as the chamber temperature naturally reached 440°C, active cooling with water injection would have started but this was stopped manually to allow checking of the load.
- It took approximately 100min for the temperature to cool enough for the chamber to be opened - in the 250 - 300°C range.
- The basket was then lifted out and the contents that remained in it - that is, load remains that did not simply fall through the bottom of the basked during the run - were weighed and compared.

Following waste treatment the remains on the basket had a weight of 0.69kg, that is, a reduction in mass of 83%. Also, the "catalogue shape" of the pile was significantly disturbed with only a small charred core of each sheet.

### Comparative Example 1

Apparatus was loaded with catalogues having gloss paper sheets. The catalogues were placed in the exact centre of the chamber grid and had A4 dimensions, forming a pile of 96mm in height and had a weight of 4kg. The grid was formed by a mesh basket which was suspended within the chamber. The chamber of the apparatus used was approximately 43cm in internal diameter, and approximately 75cm in internal depth.

The waste treatment process was computer software controlled and proceeded as per example 4, however, the air compressor was mechanically disabled for this run and no air blasts occurred.

The weight of the load remaining in the basket after treatment was reduced from 4.0kg to 1.1kg - a reduction in mass of 73%. Also, the catalogue pile essentially retained its shape, with individual sheets recognizable, but having turn completely white on the outside, due to a fine layer of ash. The catalogue pile had additionally "swollen" (that is with spaces between individual sheets), and, when opened, the core of each sheet consisted of black charred material. The outside of each sheet consisted of very fragile ash which collapsed upon touch.

The invention hence provides treatment of waste by pyrolysis and combustion, and apparatus for doing so.

## Claims

1. A process for waste treatment comprising:-
introducing waste into a chamber, heating the waste to an elevated temperature to effect pyrolysis of the waste, introducing oxygen into the chamber to effect combustion of the waste, and removing combusted waste from the chamber,
**characterised by** agitating the waste by periodically disrupting waste material with bursts of gas so as to promote combustion of the waste.

2. A process according to claim 1, wherein the periodically disrupting comprises introducing gas at high pressure into the chamber.

3. A process according to any of claims 1 and 2, wherein the process comprises periodically disrupting the waste at a frequency from at least once every 20 seconds to at least once every 5 minutes.

4. A process according to any of claims 1-3, wherein the gas comprises air.

5. A process according to any previous claim, comprising introducing the gas into the chamber at a pressure of 3 atmospheres or greater, preferably the gas is at a pressure of 5 atmospheres or greater.

6. A process according to any previous claim, wherein the temperature to effect pyrolysis is from 400-700°C.

7. A process according to any previous claim, comprising carrying out combustion at a temperature of at least 400°C.

8. A process for waste treatment according to any of claims 1 to 7, comprising introducing a small amount of air into the chamber during pyrolysis and agitating accumulated ash produced by the combustion to dislodge the accumulated ash and urge it towards an exit of the chamber.

9. Apparatus for waste treatment according to a process of any of claims 1-8, comprising:-
a sealable chamber,
a waste treatment zone in the chamber,
a port for introducing waste into the chamber,
a port for the exit of treated waste, and
a heating element,
one or more air inlets in a wall of the chamber,
a high pressure air source,
one or more conduits to connect the air inlets to the high pressure air source, and
control equipment,
**characterised in that** the control equipment is adapted to agitate the waste by periodically disrupting waste material by introducing bursts of air into the chamber via the control equipment and the one or more air inlets so as to promote combustion of waste.

10. Apparatus according to claim 9, wherein the one or more air inlets are in the form of nozzles located in a lower wall portion of the chamber, being at least half way down the wall, or in the bottom of the chamber.

11. Apparatus according to any of claim 9 or claim 10, wherein the one or more air inlets are adapted in use to direct air at high pressure towards combusting material located towards the bottom of the chamber.

12. Apparatus according to any of claims 9-11, wherein in use air is introduced into the chamber at a pressure of at least 3 atmospheres, preferably air is introduced into the chamber at a pressure of at least 5 atmospheres.

13. Apparatus according to any of claims 9-12, wherein
the one or more air inlets can independently be used to introduce air into the chamber, and wherein the control equipment is further programmed to operate in at least one of the following modes:-
(i) air is introduced into the chamber via the control equipment during pyrolysis of waste in the chamber to dilute off-gas exiting the chamber; and
(ii) air is introduced into the chamber via the control equipment during combustion to dislodge accumulated ash.

14. Apparatus according to any of claims 9-12, wherein said one or more inlets are connected to an air supply and to a water supply via the control equipment such that the or each of the one or more inlets can independently be used to introduce air or water into the chamber, and wherein the control equipment is also programmed to operate in mode (iii) wherein water is introduced into the chamber during combustion to dislodge accumulated ash.

## Patentansprüche

1. Verfahren zur Abfallbehandlung, umfassend:
Einbringen von Abfall in eine Kammer, Erhitzen des Abfalls auf eine erhöhte Temperatur, um eine Pyrolyse des Abfalls zu bewirken, Einbringen von Sauerstoff in die Kammer, um eine Verbrennung des Abfalls zu bewirken, und Entfernen von verbranntem Abfall aus der Kammer,
**gekennzeichnet durch** das Bewegen des Abfalls durch periodisches Aufbrechen von Abfallstoffen mit Gasstößen, um die Verbrennung des Abfalls zu fördern.

2. Verfahren nach Anspruch 1, wobei das periodische Aufbrechen das Einbringen von Gas unter hohem Druck in die Kammer umfasst.

3. Verfahren nach einem der Ansprüche 1 und 2, wobei das Verfahren das periodische Aufbrechen des Abfalls in einer Frequenz von mindestens einmal alle 20 Sekunden bis mindestens einmal alle 5 Minuten umfasst.

4. Verfahren nach einem der Ansprüche 1-3, wobei das Gas Luft umfasst.

5. Verfahren nach einem vorhergehenden Anspruch, das das Einbringen des Gases in die Kammer unter einem Druck von 3 Atmosphären oder höher umfasst, vorzugsweise wobei das Gas unter einem Druck von 5 Atmosphären oder höher steht.

6. Verfahren nach einem vorhergehenden Anspruch, wobei die Temperatur zum Bewirken der Pyrolyse von 400-700 °C beträgt.

7. Verfahren nach einem vorhergehenden Anspruch, das das Durchführen der Verbrennung bei einer Temperatur von mindestens 400 °C umfasst.

8. Verfahren zur Abfallbehandlung nach einem der Ansprüche 1 bis 7, das das Einbringen einer geringen Luftmenge in die Kammer während der Pyrolyse und das Bewegen von angesammelter Asche, die durch die Verbrennung produziert wurde, um die angesammelte Asche zu lösen und sie zu einem Austritt der Kammer zu treiben, umfasst.

9. Vorrichtung zur Abfallbehandlung gemäß einem Verfahren nach einem der Ansprüche 1-8, umfassend:
eine verschließbare Kammer,
eine Abfallbehandlungszone in der Kammer,
eine Öffnung zum Einbringen von Abfall in die Kammer,
eine Öffnung für den Austritt von behandeltem Abfall und
ein Heizelement,
ein oder mehrere Lufteinlässe in einer Wand der Kammer,
eine Hochdruckluftquelle,
eine oder mehrere Leitungen, um die Lufteinlässe mit der Hochdruckluftquelle zu verbinden, und
eine Steuereinrichtung,
**dadurch gekennzeichnet, dass** die Steuereinrichtung dazu eingerichtet ist, den Abfall durch periodisches Aufbrechen von Abfallstoffen durch Einbringen von Luftstößen in die Kammer mittels der Steuereinrichtung und dem einen oder den mehreren Lufteinlässen zu bewegen, um eine Verbrennung des Abfalls zu fördern.

10. Vorrichtung nach Anspruch 9, wobei der eine oder die mehreren Lufteinlässe in der Form von Düsen sind, die in einem unteren Wandabschnitt der Kammer angeordnet sind, wobei sie sich zumindest auf halber Höhe der Wand oder im Boden der Kammer befinden.

11. Vorrichtung nach Anspruch 9 oder 10, wobei der eine oder die mehreren Lufteinlässe dazu eingerichtet sind, im Gebrauch Luft unter hohem Druck zu Verbrennungsmaterial hin, das zu dem Boden der Kammer hin angeordnet ist, zu leiten.

12. Vorrichtung nach einem der Ansprüche 9-11, wobei im Gebrauch Luft in die Kammer unter einem Druck von mindestens 3 Atmosphären eingebracht wird, vorzugsweise wobei Luft in die Kammer unter einem Druck von mindestens 5 Atmosphären eingebracht wird.

13. Vorrichtung nach einem der Ansprüche 9-12, wobei der eine oder die mehreren Lufteinlässe unabhängig dazu verwendet werden können, Luft in die Kammer einzubringen, und wobei die Steuereinrichtung weiterhin dazu programmiert ist, in mindestens einem der folgenden Modi zu arbeiten:
(i) Luft wird in die Kammer mittels der Steuereinrichtung während einer Pyrolyse von Abfall in der Kammer eingebracht, um Abgas, das aus der Kammer austritt, zu verdünnen; und
(ii) Luft wird in die Kammer mittels der Steuereinrichtung während der Verbrennung eingebracht, um angesammelte Asche zu lösen.

14. Vorrichtung nach einem der Ansprüche 9-12, wobei der eine oder die mehreren Einlässe mit einer Luftzufuhr und mit einer Wasserzufuhr mittels der Steuereinrichtung verbunden sind, so dass der eine oder die mehreren Einlässe unabhängig dazu verwendet werden können, Luft oder Wasser in die Kammer einzubringen, und wobei die Steuereinrichtung außerdem dazu programmiert ist, in einem Modus (iii) zu arbeiten, in dem Wasser in die Kammer während der Verbrennung eingebracht wird, um angesammelte Asche zu lösen.

## Revendications

1. Procédé permettant le traitement de déchets comprenant :-
l'introduction de déchets dans une chambre, le chauffage des déchets à une température élevée pour effectuer la pyrolyse des déchets, l'introduction d'oxygène dans la chambre pour effectuer la combustion des déchets et le retrait des déchets brûlés de la chambre,
**caractérisé par** l'agitation des déchets en perturbant périodiquement des déchets avec des jets de gaz de façon à favoriser la combustion des déchets.

2. Procédé selon la revendication 1, ladite perturbation de manière périodique comprenant l'introduction de gaz à haute pression dans la chambre.

3. Procédé selon l'une quelconque des revendications 1 et 2, ledit procédé comprenant la perturbation de manière périodique des déchets à une fréquence allant d'au moins une fois toutes les 20 secondes à au moins une fois toutes les 5 minutes.

4. Procédé selon l'une quelconque des revendications 1 à 3, ledit gaz comprenant de l'air.

5. Procédé selon l'une quelconque des revendications précédentes, comprenant l'introduction du gaz dans la chambre à une pression supérieure ou égale à 3 atmosphères, de préférence le gaz étant à une pression supérieure ou égale à 5 atmosphères.

6. Procédé selon l'une quelconque des revendications précédentes, ladite température pour effectuer la pyrolyse allant de 400 à 700°C.

7. Procédé selon l'une quelconque des revendications précédentes, comprenant la réalisation d'une combustion à une température supérieure ou égale à 400°C.

8. Procédé permettant le traitement de déchets selon l'une quelconque des revendications 1 à 7, comprenant l'introduction d'une petite quantité d'air dans la chambre durant la pyrolyse et l'agitation des cendres accumulées produites par la combustion afin de déloger les cendres accumulées et les amener vers une sortie de la chambre.

9. Appareil destiné au traitement de déchets selon un procédé de l'une quelconque des revendications 1 à 8, comprenant :-
une chambre pouvant être fermée hermétiquement,
une zone de traitement de déchets dans la chambre,
un orifice permettant l'introduction des déchets dans la chambre,
un orifice permettant la sortie des déchets traités et
un élément chauffant ;
une ou plusieurs entrées d'air dans une paroi de la chambre,
une source d'air à haute pression,
un ou plusieurs conduits pour raccorder les entrées d'air à la source d'air à haute pression, et
un équipement de commande,
**caractérisé en ce que** l'équipement de commande est conçu pour agiter les déchets en perturbant périodiquement les déchets par l'introduction de jets d'air dans la chambre par l'intermédiaire de l'équipement de commande et de la ou des entrées d'air de façon à favoriser la combustion des déchets.

10. Appareil selon la revendication 9, ladite ou lesdites entrées d'air étant sous forme de buses situées dans une partie inférieure de paroi de la chambre, étant au moins à mi-chemin de la paroi, ou dans le fond de la chambre.

11. Appareil selon la revendication 9 ou 10, ladite ou lesdites entrées d'air étant conçues pour diriger, lors de l'utilisation, l'air à haute pression vers les matériaux en train de brûlés situés vers le fond de la chambre.

12. Appareil selon l'une quelconque des revendications 9 à 11, lors de l'utilisation ledit air étant introduit dans la chambre à une pression supérieure ou égale à 3 atmosphères, de préférence ledit air étant introduit dans la chambre à une pression supérieure ou égale à 5 atmosphères.

13. Appareil selon l'une quelconque des revendications 9 à 12, ladite ou lesdites entrées d'air pouvant être utilisées indépendamment pour introduire de l'air dans la chambre, et ledit équipement de commande étant programmé en outre pour fonctionner dans au moins l'un des modes suivants :-
(i) l'air est introduit dans la chambre par l'intermédiaire de l'équipement de commande durant la pyrolyse des déchets dans la chambre pour diluer des effluents gazeux sortant de la chambre ; et
(ii) l'air est introduit dans la chambre par l'intermédiaire de l'équipement de commande durant la combustion pour déloger des cendres accumulées.

14. Appareil selon l'une quelconque des revendications 9 à 12, ladite ou lesdites entrées étant raccordées à une prise d'air et à une alimentation en eau par l'intermédiaire de l'équipement de commande de sorte que la ou chacune des entrées puissent être utilisée indépendamment pour introduire de l'air ou de l'eau dans la chambre et ledit équipement de commande étant également programmé pour fonctionner en mode (iii) dans lequel l'eau est introduite dans la chambre durant la combustion pour déloger les cendres accumulées.
